Europäisches Patentamt

European Patent Office

Office européen des brevets

(11) Publication number: **0 457 272 A2**

## EUROPEAN PATENT APPLICATION

(21) Application number: **91107789.9**

(22) Date of filing: **14.05.91**

(51) Int. Cl.⁵: **G06K 11/18**

(30) Priority: **15.05.90 JP 124720/90**

(43) Date of publication of application:
**21.11.91 Bulletin 91/47**

(84) Designated Contracting States:
**DE FR GB**

(71) Applicant: **MITSUBISHI DENKI KABUSHIKI KAISHA**
**2-3, Marunouchi 2-chome Chiyoda-ku**
**Tokyo(JP)**

(72) Inventor: **Akiyama, Tosirou, c/o Seikatsu System Kenkyusho**
**Mitsubishi Denki K.K., 14-40, Ofuna 2-chome**
**Kamakura-shi, Kanagawa-ken(JP)**

(74) Representative: **Pfenning, Meinig & Partner**
**Mozartstrasse 17**
**W-8000 München 2(DE)**

(54) Locator device.

(57) A locator device comprises a housing (1) having an open top, a ball (2) rotatably mounted within the housing, a pair of rollers (3, 23) arranged substantially at right angles to one another and placed in contact with the ball, each roller including a plurality of grooves (3i), a corresponding pair of photosensors (8, 28) mounted within the housing, a printed circuit (10) connected to the photosensors, and a cover (11) secured to close the open top of the housing. The housing has a pair of integral mounts (7, 27) for receiving the photosensors adjacent to the rollers. In a preferred embodiment, the grooves of each roller extend obliquely of the axis of the roller. The cover includes a hole (11A) through which the ball may be inserted into and removed from the housing.

EP 0 457 272 A2

The present invention relates to a locator device, commonly referred to as a mouse, connected to provide coordinate data to a computer.

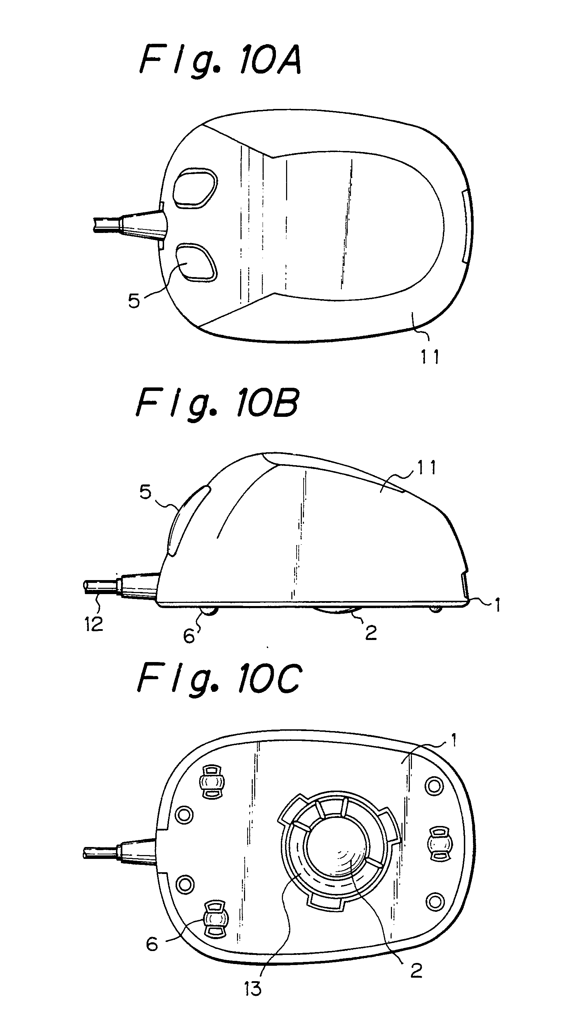

A typical locator device or mouse is exemplified in Japanese laid-open utility model publication No. 155954/86. Referring to Fig. 10, the disclosed device includes a base 1 molded of synthetic resin, and a substantially semispherical cover 11 molded of synthetic resin and secured to the base 1.

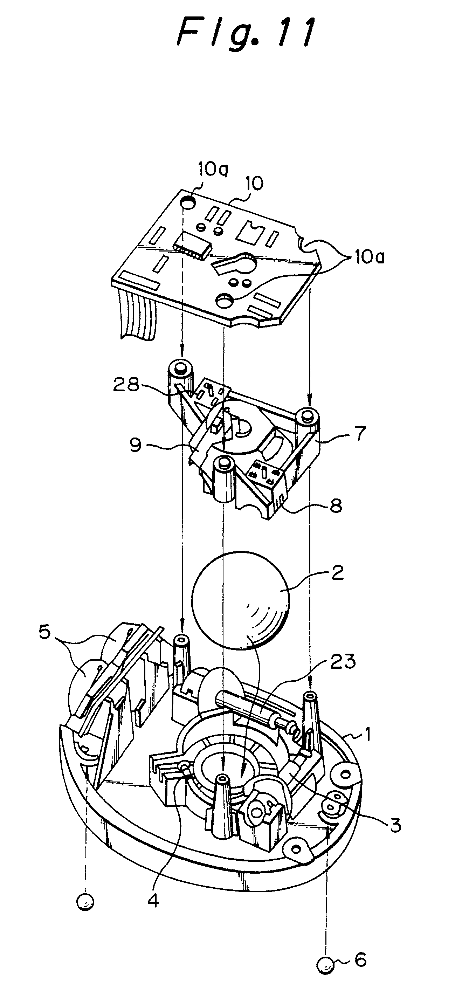

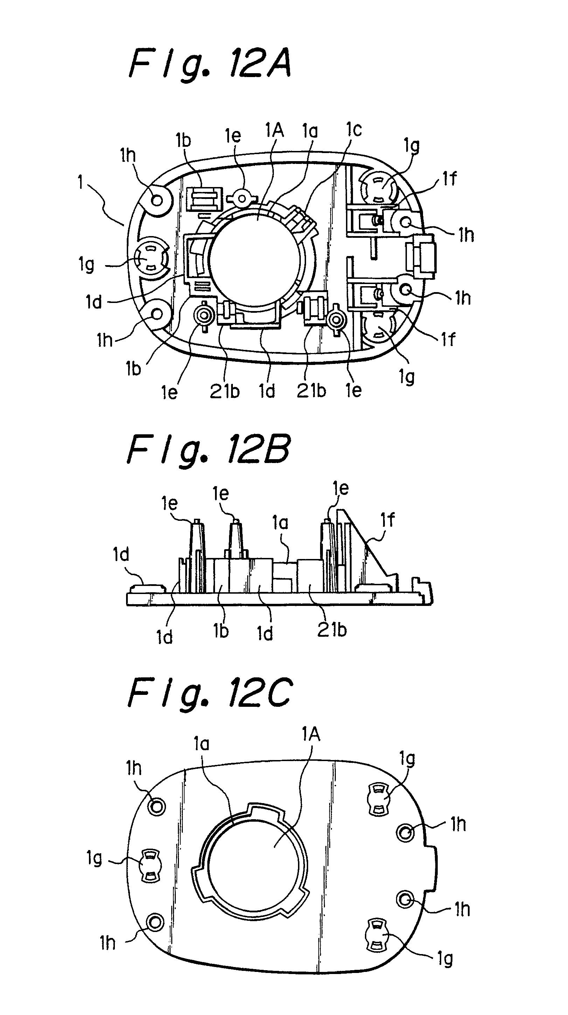

Referring to Fig. 12A through 12C, the base 1 has a central opening 1A. An annular wall 1a extends upwardly from the base 1 to receive a ball 2. The ball 2 extends through the central opening 1A to contact the top of a desk (Fig. 10B). A pair of spaced roller supports 1b and 1b are integral with the annular wall 1a to rotatably support a first roller unit 3. A similar pair of spaced roller supports 21b and 21b are integral with the annular wall 1a to rotatably support a second roller unit 23. The first roller unit 3 extends at right angles to the second roller unit 23. A press roller 4 unit is supported on a press roller support 1c between the first roller unit 3 and the second roller unit 23 so as to urge the ball 2 against the first roller unit 3 and the second roller unit 23. Two dust walls 1d are integral with the annular wall 1a between the two roller supports 1b and 1b and between the other two roller supports 21b and 21b, respectively to prevent entry of unwanted dust into the device. Three posts 1e extends upright on the base 1 around the annular wall 1a to position a holder and a printed circuit as will later be described in detail. A switch mount 1f is formed at the front of the base 1 and has two slant walls to which two switch units 5 (see Figs. 11 and 12) are mounted. As best shown in Fig. 12C, three ball holders 1g are formed on the bottom of the base 1 to carry respective balls 6 (see Fig. 10). The locator device can be moved on a desk top by the large ball 2 and three small balls 6. Formed in the base 1 adjacent to the ball holders 1g are holes 1h through which respective screws extend to secure the cover or dome 11 to the base 1. A lid 13 is detachably mounted to the bottom of the base 1 as shown in Fig. 10C.

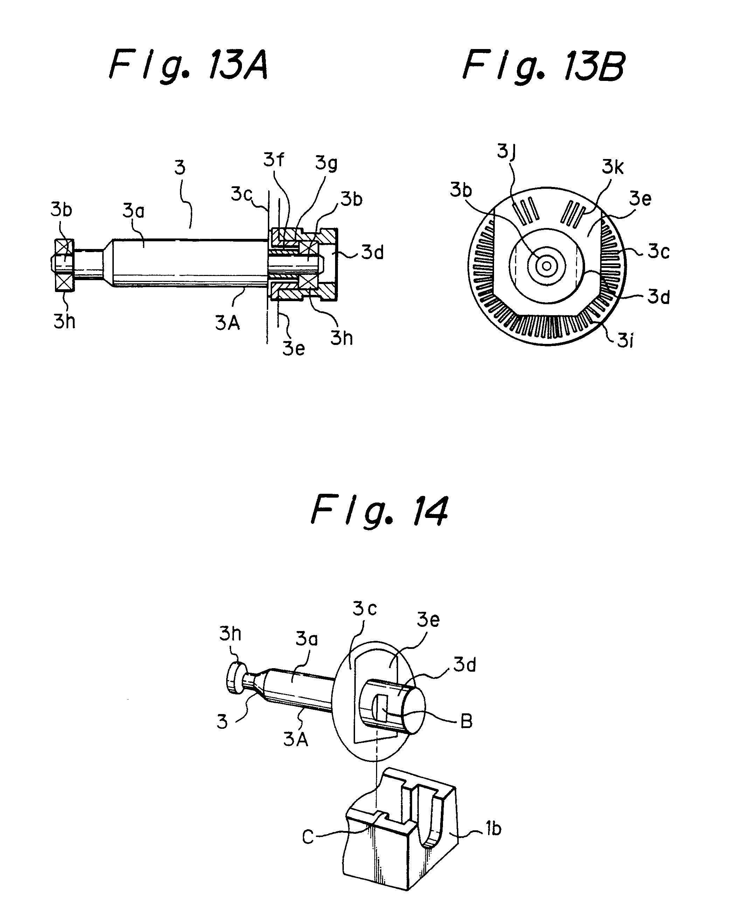

Referring to Figs. 13 and 14, the first roller unit 3 includes a roller 3a made of metal and adapted to contact with the ball 2. The roller 3a has opposite ends 3b received in a pair of bearings 3h. A rotatable slit disk 3c, made of metal, is mounted on the end of the roller 3a and held in position by a metal ring 3f which is, in turn, fit around the end of the roller 3a. A sleeve 3d is mounted to surround the end 3b of the roller 3a. A fixed slit plate 3e is sandwiched between the sleeve 3d and a metal insert 3g to leave a space between the fixed slit plate 3e and the rotatable slit disk 3c. As best shown in Fig. 14, the sleeve 3d has a recess B, and the roller support 1b has a corresponding projection C. When the sleeve 3d is placed in the roller support 1b, the recess B is brought into engagement with the projection C. This prevents rotation and axial displacement of the slit plate 3e. The second roller unit 23 is similar in structure to the first roller unit 3 and will not be described.

As best shown in Fig. 13B, the rotatable slit disk 3c has a multiplicity of radial slits 3i. The fixed slit disk 3e has two sets of radial slits 3j and 3k with each set including three radial slits. Either one of the two sets of radial slits is out of phase with respect to the radial slits 3i. That is, when the set of radial slits 3k is brought into alignment with the radial slits 3i of the rotatable slit disk 3c, for example, the other set of radial slits 3j and the radial slits 3i partly overlap with one another, and vice versa. This arrangement enables detection of the direction of rotation of the roller 3a or the direction of movement of the locator device.

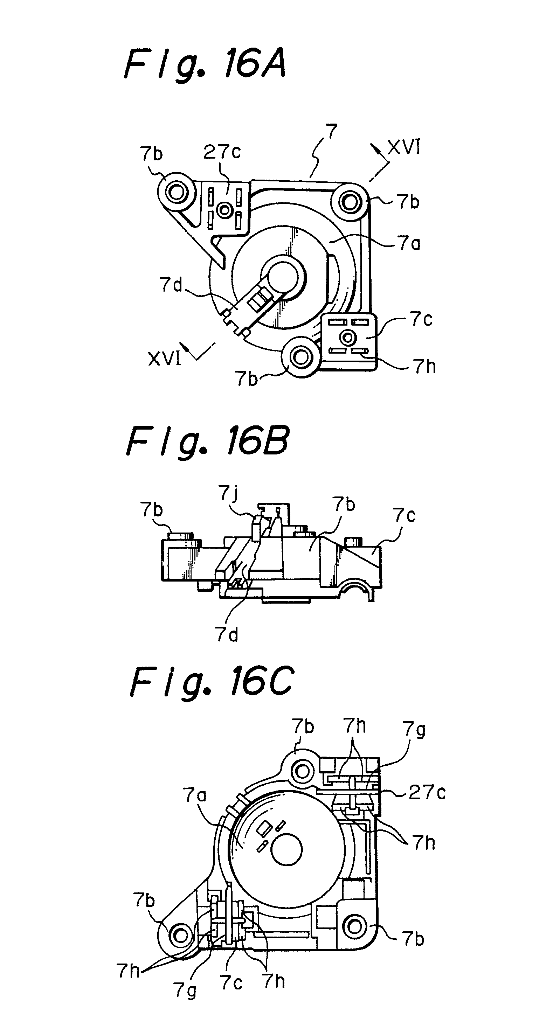

Referring to Fig. 15, the press roller unit 4 is made of metal and includes a roller 4a and a shaft 4b extending through the roller 4a. A bearing (not shown) is incorporated into the roller 4a so that the roller 4a is rotatable on the shaft 4b. The press roller support 1c has a pair of slant surfaces D to receive opposite ends of the shaft 4b. The press roller unit 4 is held in position by a spring 9 which will later be described. A part of the roller 4a extends into the annular wall 1a through a recess so as to constantly urge the ball 2 against the first roller unit 3 and the second roller unit 23.

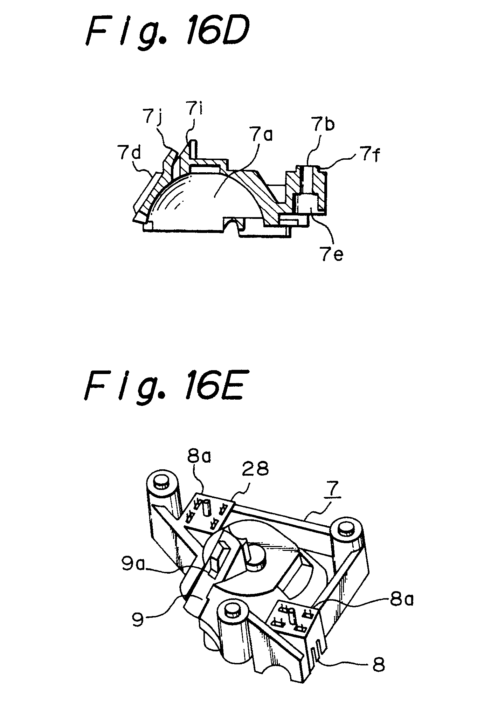

Referring to Figs. 16A through 16E, the holder 7 is generally triangular as viewed in plan and includes, in a unitary fashion, a dome 7a, three posts 7b, photosensor mounts 7c and 27c, and a spring mount 7d. The dome 7a is so shaped as to allow vertical movement of the ball 2 within the dome 7a. The three posts 7b are located at three corners of the holder 7 and include holes 7e to receive the corresponding posts 1e as best shown in Fig. 16D. Each post 7b also has a projection 7b which extends through an opening 10a of a printed circuit 10 (see Fig. 11). Three screws (not shown) extend through the posts 1e of the base 1, the posts 7b of the holder 7, and the openings 10a of the printed circuit 10 to secure the base 1, the holder 7 and the printed circuit 10 together.

The photosensor mounts 7c and 27c correspond in position to the slit plates of the first and second roller units 3 and 23. Each photosensor mount has a groove 7g in which the upper portions of the slit plates 3c and 3e are located, and two pairs of holes 7h formed at opposite sides of the groove 7g. Two photosensors 8 and 28 are mounted to the corresponding photosensor mounts 7c and 27c, respectively, with light emitting elements and light receiving elements inserted into the holes 7h. As best shown in Fig. 16E, the light emitting element and light receiving element of each photosensor have terminals which extend through the holes 7h and are connected to the printed circuit 10.

As best shown in Fig. 16E, the spring mount 7d has an integral projection 7j with an associated groove 7i. A spring 9 has an opening 9a through which the projection 7j extends when the spring 9 is mounted through the groove 7i to the spring mount 7d in a cantilever fashion. The spring 9 is adapted to urge the press roller unit 4 toward the ball 2.

While a user moves the locator device on the desk top, the ball 2 is rotated. If the locater device is moved along the Y-axis direction, the first roller unit 3 and the slit disk 3c are rotated. The photosensor 8 then counts the number of slits 3i that passes between the light emitting element and the light receiving element and send information to the printed circuit 10. The printed circuit 10 then converts the input information from the photosensor 8 into electric pulses. The computer is operable to control a pointer on the display screen in response to the electric pulses. The user tells the computer to perform the indicated action by pressing a button atop the locator device. If the locator device is moved along the X-axis direction, the second roller unit 23 and its slit disk is rotated. The photosensor 28 operates in the same manner as the photosensor 8.

The prior art locator device thus constructed requires a large number of parts and is, thus, expensive to manufacture. A further problem is that the prior device consumes a substantial amount of space and can not be made in a compact form.

A portable computer has come into an increasing use because of the great savings in the price and space. There is a need for a small and compact locator device that can be incorporated into such a portable computer.

Accordingly, it is an object of the present invention to provide an improved locator device which is simple in structure, is easy to assemble, and is compact such that the device can be incorporated into a portable small computer.

According to one embodiment of the present invention, there is provided a locator device comprising a housing having an open top, a ball rotatably mounted within the housing, a pair of rollers arranged substantially at right angles to one another and placed in contact with the ball, each of the rollers including a plurality of grooves, a corresponding pair of photosensors mounted within the housing, a printed circuit connected to the photosensors, and a cover secured to close the open top of the housing. The housing includes an integral means for receiving the photosensors adjacent to the rollers. This arrangement not only facilitates positioning of means for receiving the photosensors relative to the photosensors, but also eliminates the need for a photosensor holder to hold the photosensors.

Each photosensor includes a pair of photoreflectors. Each photoreflector has a light emitting element and a light receiving element. Light is emitted from the light emitting elements of the photoreflectors to the rollers, but with slight offset. In a preferred embodiment, the grooves of each roller extend obliquely of the axis of the roller. In this way, the two photoreflectors can be located at the same level. This facilitates mounting of the photosensors to the means for receiving the photosensors.

The cover has a hole through which the ball can be mounted to and removed from the housing. This arrangement results in a decrease in the height of the overall locator device. This allows the use of a smaller ball.

For a better understanding of the invention, reference may be made to the following description of a preferred embodiment when taken in conjunction with the accompanying drawings, in which:

Fig. 1A is a top plan view of a locator device made according to one embodiment of the present invention;

Figs. 1B and 1C are side and bottom views of the locator device shown in Fig. 1A;

Fig. 2 is an exploded perspective view showing the internal structure of the locator device shown in Fig. 1;

Figs. 3A is a top plan view of a housing shown in Fig. 2;

Figs. 3B is a sectional view taken on the line III-III of Fig. 3A;

Fig. 3C is a bottom view of the housing;

Figs. 4A is a top plan view of a cover shown in Fig. 2;

Figs. 4B is a sectional view taken on the line IV-IV of Fig. 4C;

Fig. 4C is a bottom view of the cover;

Figs. 5A and 5B are side and front views of a first roller unit shown in Fig. 2;

Figs. 6A and 6B are perspective and sectional side views showing the manner in which the first roller units are mounted;

Fig. 7 is a perspective view showing the manner in which a press roller is mounted;

Fig. 8 is a perspective view showing the manner in which a photosensor is mounted;

Figs. 9A and 9B show the first roller unit in a modified form;

Fig. 10A is a top plan view of a conventional locator device;

Figs. 10B and 10C are side and bottom views of the prior art locator device shown in Fig. 10A;

Fig. 11 is an exploded perspective view showing the internal structure of the prior art locator device in detail;

Fig. 12A is a top plan view of a base shown in Fig. 11;

Figs. 12B and 12C are side and bottom views of the base shown in Fig. 12A;

Figs 13A and 13B are side and front views of a first roller unit shown in Fig. 11;

Fig. 14 is a perspective view showing the manner in which the first roller unit shown in Figs. 13A and 13B is mounted to the base;

Fig. 15 is a perspective view showing the manner in which a press roller unit is mounted to the base;

Fig. 16A is a top plan view of a photosensor holder shown in Fig. 11;

Figs. 16B and 16C are side and bottom views of the photosensor holder shown in Fig. 16A;

Fig. 16D is a sectional view taken on the line XVI-XVI in Fig. 16A; and

Fig. 16E is a perspective view of the photosensor holder with two photosensors mounted thereto.

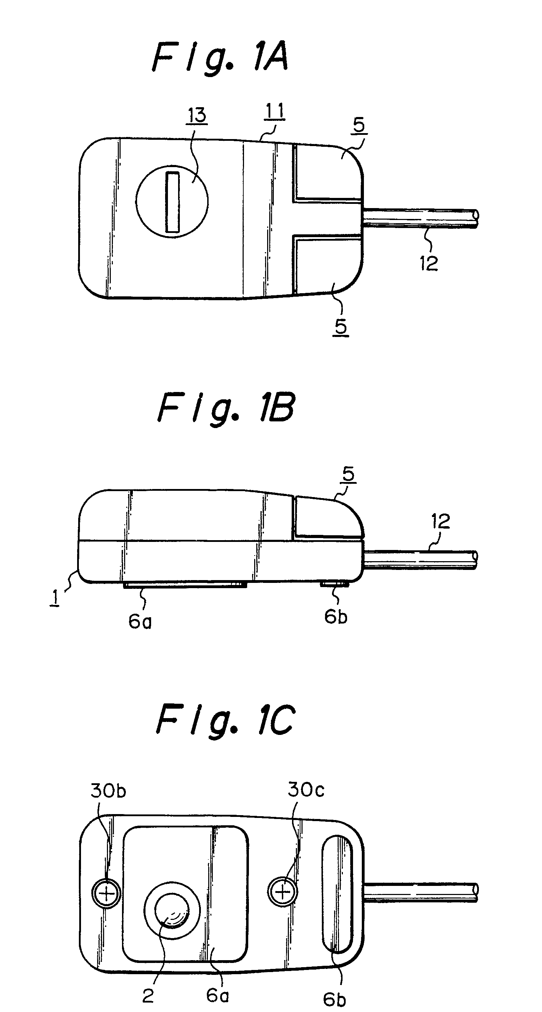

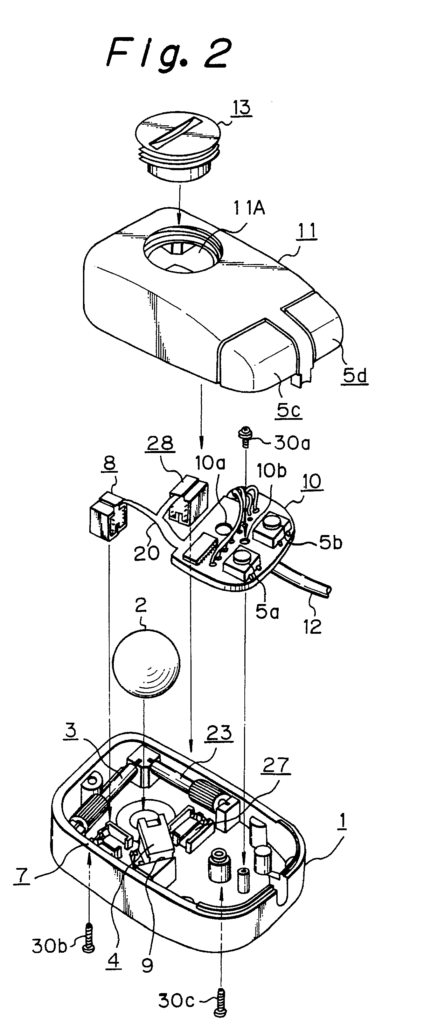

Referring now to Figs. 1 and 2, there is shown a locater device made according to one embodiment of the present invention and including a housing 1 molded of synthetic resin, and a cover 11 secured to the base 1. The locator device is connected to an associated unit or computer (not shown) through a cable 12.

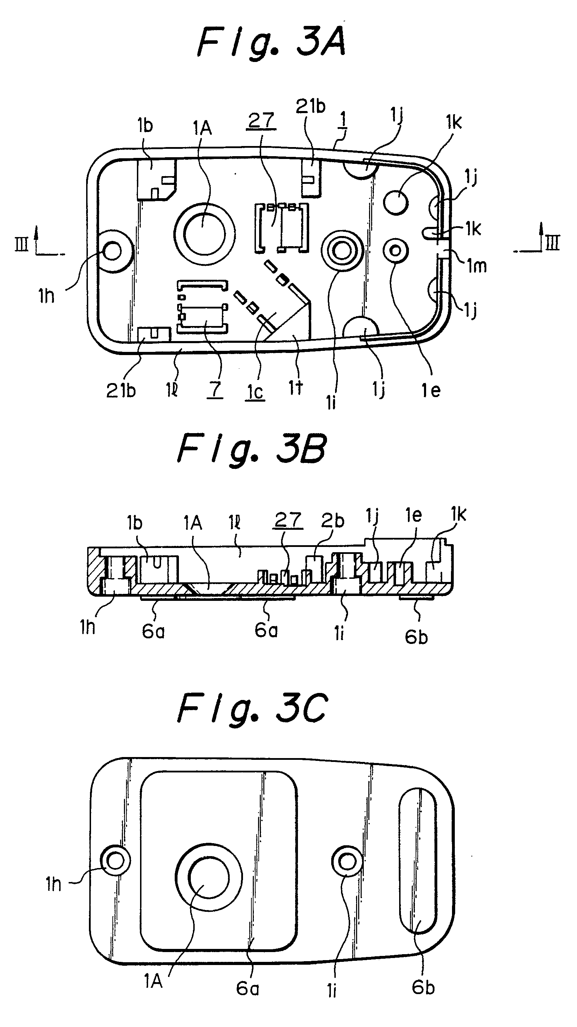

Referring specifically to Figs. 3A to 3C, the housing 1 is generally rectangular as viewed in plan and has an opening 1A to receive a ball 2. A roller bearing assembly 1b and 21b is located in the housing 1 to journal a first roller unit 3 and a second roller unit 23. A press roller support 1c is also located between the roller bearings 21b and 21b to support a press roller unit 4. A pair of photosensor mounts 7 and 27 are provided between the roller bearings 21b and the press roller support 1c to receive a pair of identical photosensors 8 and 28. As better shown in Fig. 3B, two posts 1h and 1i extend upright and have threaded through holes. A post 1e has a threaded hole and cooperate with four elements 1j to support a printed wiring board or circuit 10. The printed circuit 10 has an opening 10a through which the upper portion of the post 1i extends. A screw 30a extends into the threaded hole of the post 1e to secure the printed circuit 10 to the housing 1. Two cable guides 1K are formed in the housing 1 to guide the cable and relieve stress in tension to be exerted on the cable 12. The housing 1 has a wall 1ℓ. Formed in the wall is a notch 1m through which the cable 12 extends externally of the housing 1. As best shown in Fig. 3C, two sliding plates 6a and 6b are made of fluoroplastic or similar material and adhesively attached or otherwise secured to the underside of the housing 1.

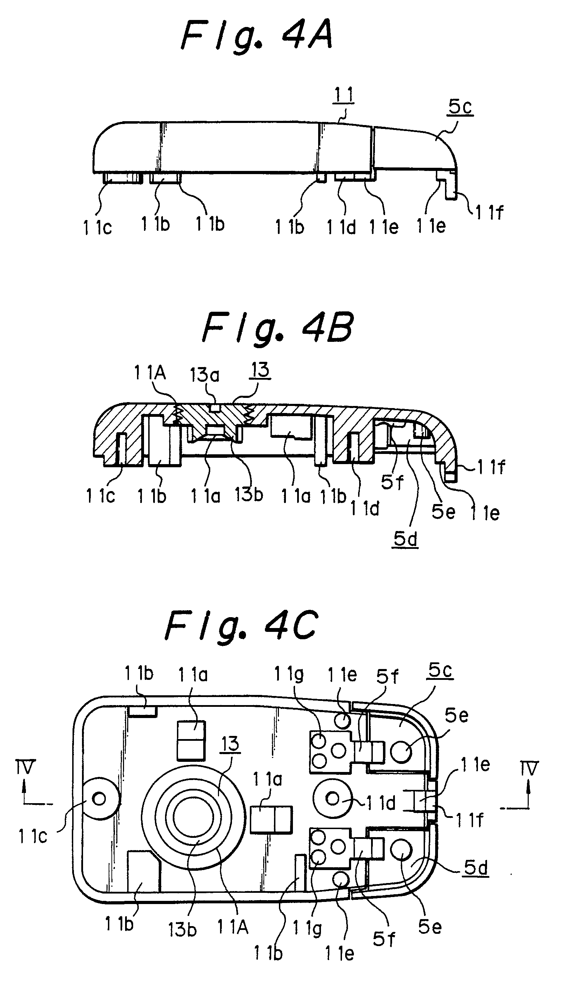

Referring to Figs. 4A to 4C, the cover 11 is generally rectangular as viewed in plan and has a threaded hole 11A through which the ball 2 can be removed from the locator device. A threaded lid 13 has a slot 13a. A user may place a coin in the slot 13a to turn the lid 13 so as to open and close the hole 11A of the cover 11. The lid 13 has a semispherical recess to receive the upper portion of the ball 2. A pair of projections 11a extend from the lower surface of the cover 11 to hold the photosensors 8 and 28 in place. Three projections 11b also extend downwardly from the lower surface of the cover 11 to prevent disengagement of opposite ends of the first roller unit 3 and the second roller unit 23 from the bearings 1b and 21b. Three projections 11e are provided to ensure placement of the printed circuit 10 on the housing 1. A pair of posts 11c and 11d are placed in alighment with the posts 1h and 1i of the housing 1, and two screws 30b and 30c extend through the posts 1h and 1i into the posts 11c and 11d so as to secure the cover 11 and the housing 1 together. A projection 11f extends downwardly from one end of the cover 11 into the notch 1m to hold the cable 12 in place.

A switch unit 5 has a pair of vertically pivotable buttons 5c and 5d. Projections 5e extend downwardly from the lower surface of the respective buttons 5c and 5d and are adapted to press down swithes 5a and 5b mounted on the printed circuit 10. The two buttons 5c and 5d are connected to the cover 11 through respective flexible connecting elements 5f. Each connecting element 5f has three openings at its one end. The cover 11 has three corresponding projections 11g for insertion into the three openings of each connecting element 5f. Heat is applied to the top of each projection 11g to secure the button to the cover 11. When the cover 11 is connected to the housing 1, a space is left therebetween as shown in Fig. 1B. This allows downward movement of the buttons 5c and 5d.

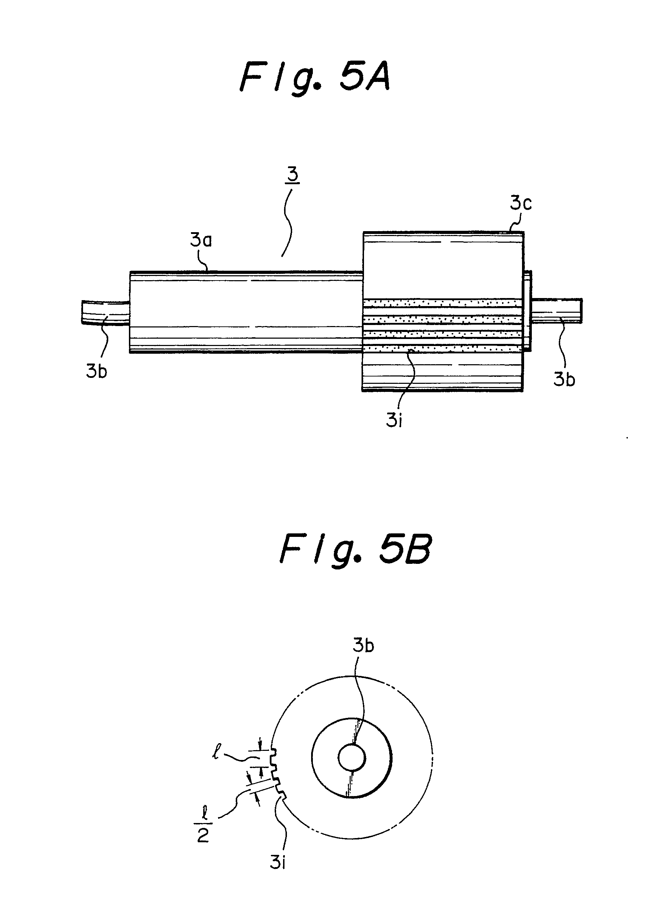

Referring to Figs. 5A and 5B, the first roller unit 3 includes a roller 3a placed in contact with the ball 2, and a cylindrical reflective element 3c integral with the roller 3a. The reflective element 3c has a smooth surface to provide high reflectance. The reflective element 3c has a plurality of equally spaced grooves 3i. Each groove 3i is coated with nonreflective paint to provide low reflectance. The width of each groove 3i is half the distance between adjacent grooves.

When the locator device is moved in the Y-axis direction, the ball 2 and thus, the first roller unit 3 are rotated. The photosensor 8 detects rotation of the first roller unit 3 and reports to the printed circuit 10. The printed circuit 10 then converts the input information from the photosensor 8 into electric pulses for transmission to the computer.

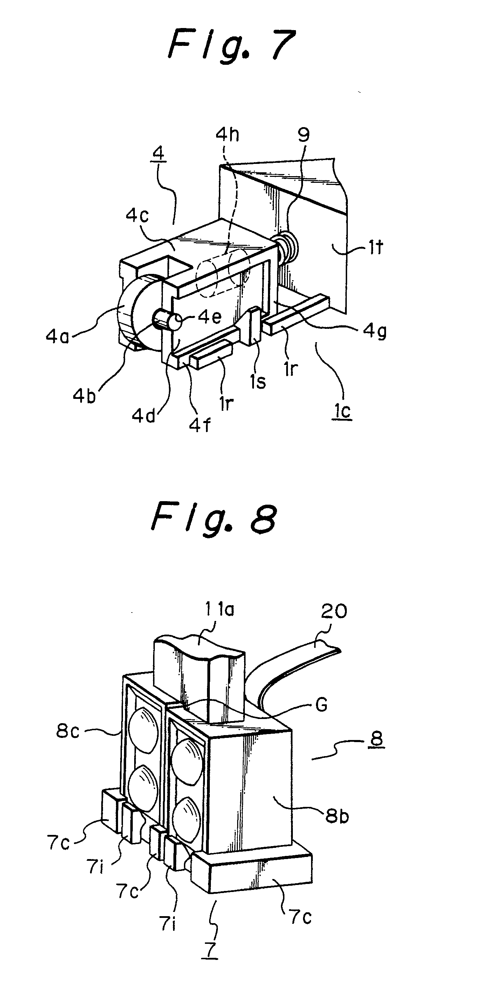

The photosensor 8 as well as the photosensor 28 has a pair of photoreflectors 8b and 8c (see Fig. 8). Each photoreflector typically includes a light emitting element, a light receiving element and a lens. Light is emitted from the light emitting element of one of the photoreflector through the lens to the first roller unit 3. The light is reflected from the first roller unit 3 and then, received by the light receiving element. The amount of light received by the light receiving element is greater when the light is emitted to the reflective element 3c than to the groove 3i. The photosensor 8 is operable to alternately produce a strong signal when light is emitted to the reflective element 33c and a week signal when light is emitted to the groove 3i while the first roller unit 3 is rotated by the distance $\ell$ - (see Fig. 5B).

The other or second photoreflector is located one fourth of the distance $\ell$ below the first photoreflector. By this arrangement, a portion of the reflective element 3c where light is emitted from the light emitting element of the second photoreflector is one fourth of the distance $\ell$ away from a portion of the reflective element 3c where light is emitted from the light emitting element of the first photoreflector. The second photoreflector produces a signal whose electric angle is 90 ° out of phase or delayed from that of a signal produced by the first photoreflector. These signals are called two phase signal. The difference in phase between two signals gives information as to which direction, either clockwise direction or couterclockwise direction, the first roller unit 2 is rotated. The photosensor 28 is substantially identical in structure and operation to the photosensor 3 and will not be described.

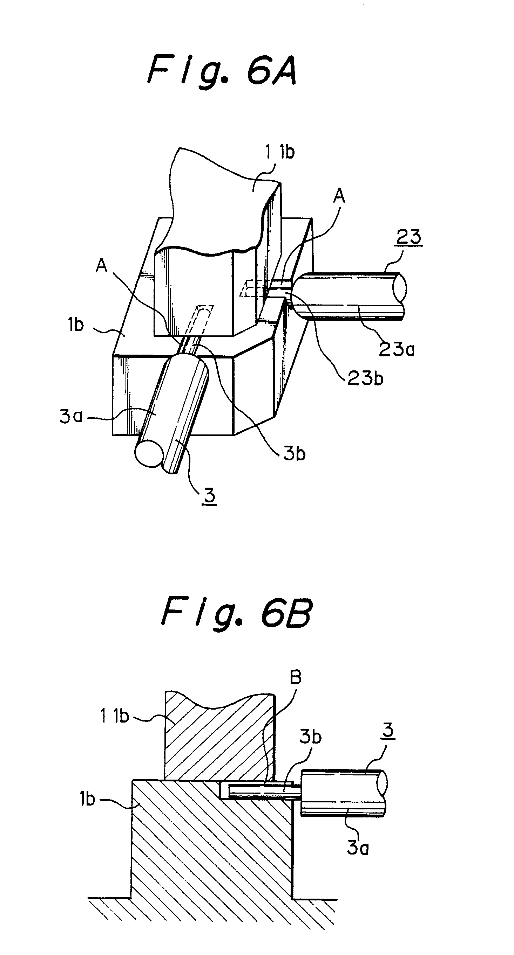

Referring to Figs. 6A and 6b, the bearing 1b has two grooves A to receive one end 3b of the roller 3a and one end 23b of the other roller 23a. The other end 3b of the roller 3a is received in a corresponding groove A which is formed in the bearing 21b. The other end of the roller 23a is also received in a corresponding groove A which is formed in the other bearing 21b. The end 3b of the roller 3a, when not in use, is in contact with the bottom of the groove A by its own weight. As discussed earlier, the projections 11b are aligned in contact with the bearings 1b and 21b so as to prevent release of the roller 3a and the roller 23a from the bearings when force is unduly applied to the rollers 3a and 23a. As better shown in Fig. 6B, a space B is defined between the bottom of the projection 11b and the top of the bearing 1b to allow rotation of the roller 3.

Referring to Fig. 7, the press roller unit 4 includes a cylindrical roller 4a made of a material with a low coefficient of friction such as fluoroplastic, and a metal shaft 4b on which the roller 4a is rotatably mounted. A holder 4c is made of fluoroplastic or similar material and has a pair of brackets 4d. The brackets 4d are recessed as at 4e to receive both ends of the shaft 4b. A pair of horizontal projections 4f extend laterally from the lower end of the holder 4c and are connected by vertical projections 4g. A blind bore 4h is formed in the rear end of the holder 4 to receive one end of a coil spring 9.

Two pairs of spaced guides 1r and 1r are integrally formed on the housing 1. A pair of spaced hooks 1s is located between the two pairs of guides 1r and 1r. The guides are in contact with the horizontal projections 4f to guide the holder 4c and to limit lateral movement of the holder 4c. The hooks 1s are also in contact with the horizontal projections 4f to limit upward movement of the holder 4c. Additionally, forward movement of the holder 4c is limited when the vertical projections 4g are brought into contact with the hooks 1s. A triangular projection 1t extends from the wall of the housing 1 to receive the other end of the coil spring 9. The press roller unit 4 urges the ball 2 against the first roller unit 3 and the second roller unit 23 under the action of the coil spring 9. However, since the roller 4a is mounted for rotation about the shaft 4b, the ball 2 is freely rotated.

Referring to Fig. 8, the light emitting element and the light receiving element of each photoreflector have leads (not shown) connected through a flexible element 20 to the printed circuit 10. The photosensor mount 8 includes a plurality of projections 7c to receive the photosensor 8. A pair of hooks 7i are also in engagement with the lower portions of the two photoreflectors 8b and 8c of the photosensor 8. As mentioned earlier, the photoreflector 8b is lower than the photoreflector 8c by one fourth of the distance $\ell$ . To this end, the projection 11a has a step G to accommodate the two photoreflector 8b and 8c of different height.

In assembly, the press roller unit 4 together with the coil spring 9 is placed in the press roller support 1c. The printed circuit 12 is secured to the housing 1. Then, the two photosensors 8 and 28 are placed in the photosensor mounts 7 and 27, respectively. The first roller unit 3 and the second roller unit 23 are mounted to the roller bearing assembly 1b and 21b. Thereafter, the cover is secured to the housing 1. The ball 2 is inserted through the opening 11A into the housing 1. The lid 13 is threaded into the hole 11A. This completes assembly of the locator device.

In operation, the ball 2 is rotated as the locator device is moved on the desk top. The first roller unit 3 and the second roller unit 23 are rotated according to the direction of movement of the locator device. Light is emitted from the light emitting elements of the photoreflectors. The light is reflected from the roller units 3 and 28 and received by the light receiving elements of the photoreflectors. The photosensors 8 and 28 send information to the printed circuit 10. The printed circuit 10 then converts the input information from the photosensors 8 and 28 to electric pulses. The output electric pulses indicate the amount and the direction of movement of the locator device. When a pointer points to the desired icon or menu selection, the user tells the computer to perform the indicated action by pressing the buttons atop the cover 11.

When the ball used has a diameter of 10 mm, for example, the locator device can be less than 15 mm in height, less than 30 mm in width, and less than 50 mm in length. The locator device is thus made in a compact form and can be incorporated into a portable computer.

The user must hold the body of the prior art mouse by his first, fourth and fifth fingers with the second and third fingers placed on two switch buttons. The user is thus required to use the wrist, the elbow, the shoulder joint. Quite differently, the user can hold the body of the locator device of the present invention only by two fingers, the first and fourth fingers, with the second and the third fingers placed on the two switch buttons. Accordingly, the user can move the locator device only by the joints of his first and fourth fingers without the need to use his elbow and shoulder. The locator device of the present invention is thus easy to use.

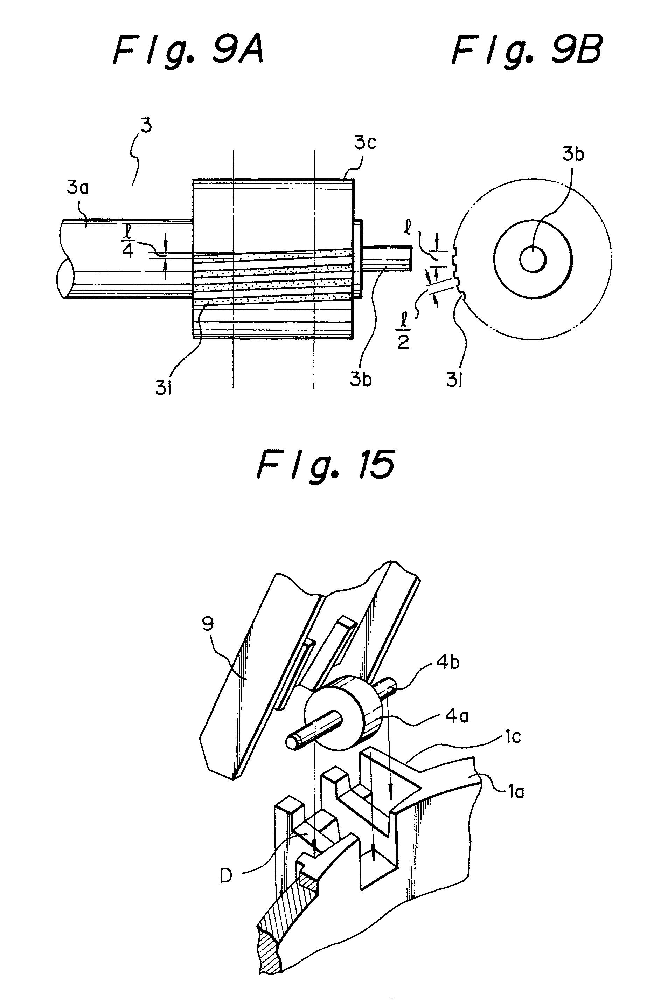

Referring back to Fig. 5A, the grooves 3i extend in a direction parallel to the axis of the roller unit 3. Alternatively, the grooves 3i may extend in a direction obliquely of the axis of the roller unit 3. Referring to Fig. 9, the grooves 3i extend obliquely of the axis of the roller unit 3 such that a portion of the reflective element 3c where light is emitted from the light emitting element of one of the photoreflectors is offset one fourth of the distance ℓ from a portion of the reflective element 3c where light is emitted from the light emitting element of the other photoreflector. By this arrangement, the photosensors can be more accurately placed. Additionally, each projection 11a no longer needs to include the step G.

It is to be understood that even though numerous characteristics and advantages of the present invention have beed set forth in the foregoing description, together with details of the structure and function of the invention, the disclosure is illustrative only. Therefore, changes may be made in detail, especially in matters of shape, size and arrangement of parts within the principles of the invention to full extent indicated by the broad meaning of the terms in which the appended claims are expressed.

## Claims

1. A locator device comprising a housing (1) having an open top, a ball (2) rotatably mounted within the housing, a pair of rollers (3, 23) arranged substantially at right angles to one another and placed in contact with said ball, each of said rollers including a plurality of grooves (3i), a corresponding pair of photosensors (8, 28) mounted within said housing, a printed circuit (10) connected to said photosensors; and a cover (11) secured to close the open top of said housing, characterised in that said housing (1) includes an integral means (7, 27) for receiving said pair of photosensors adjacent to said pair of rollers.

2. A locator device according to claim 1, wherein said grooves (3i) of each roller extend obliquely of the axis of said roller.

3. A locator device according to claim 1, wherein said cover (11) includes a hole (11A) through which said ball may be inserted into and removed from said housing (1).

## F I g. 1A

13  11  5

12

5

## F I g. 1B

5

12

1

6a  6b

## F I g. 1C

30b  30c

2  6a  6b

# Fig. 2

## F I g. 3A

## F I g. 3B

## F I g. 3C

# Fig. 4A

# Fig. 4B

# Fig. 4C

# F I g. 5A

# F I g. 5B

# F l g. 6A

# F l g. 6B

# Fig. 7

# Fig. 8

13

# F I g. 9A

# F I g. 9B

# F I g. 15

Fig. 10A

Fig. 10B

Fig. 10C

# Fig. 11

# F I g. 12A

# F I g. 12B

# F I g. 12C

# F I g. 13A

# F I g. 13B

# F I g. 14

# F I g. 16A

# F I g. 16B

# F I g. 16C

F I g. 16D

F I g. 16E